# EUROPÄISCHE PATENTSCHRIFT

(11) **EP 3 099 447 B1**
(45) Veröffentlichungstag und Bekanntmachung des Hinweises auf die Patenterteilung: **15.11.2017**
(21) Anmeldenummer: 15703450.5
(22) Anmeldetag: 23.01.2015
(51) Int. Cl.: B23P 11/02, F01L 1/047, F01L 1/053, F16C 35/063, F16C 35/067, F16D 1/08

(54) **VERFAHREN ZUM ZUSAMMENBAU EINES KRAFTFAHRZEUGMODULS**
METHOD FOR ASSEMBLING A MOTOR VEHICLE MODULE
PROCÉDÉ D'ASSEMBLAGE D'UN MODULE DE VÉHICULE AUTOMOBILE

(30) Priorität: 29.01.2014 DE 102014101088
(43) Veröffentlichungstag der Anmeldung: 07.12.2016
(73) Patentinhaber: ThyssenKrupp Presta TecCenter AG, 9492 Eschen (LI)
(72) Erfinder: SCHMID, Heiko, FL-9485 Nendeln (LI)
(74) Vertreter: thyssenkrupp Intellectual Property GmbH
(86) Internationale Anmeldenummer: PCT/EP2015/000126
(87) Internationale Veröffentlichungsnummer: WO 2015/113748

(56) Entgegenhaltungen:
- EP-B1- 1 155 770
- DE-A1-102009 051 636
- DE-A1-102010 045 047
- DE-A1-102011 081 486
- DE-A1-102012 206 499

## Beschreibung

Die vorliegende Erfindung betrifft ein Verfahren zum Zusammenbau eines Kraftfahrzeugmoduls, welches eine mit zumindest einem Funktionselement versehene Welle und ein Gehäuseteil aufweist, wobei die Welle in Lageraufnahmen des Gehäuseteils drehbar angeordnet ist, und wobei das zumindest eine Funktionselement mit einer Nabenöffnung auf einer Verdickung der Welle befestigt ist. Das Verfahren umfasst dabei die Schritte:
Anordnen des zumindest einen Funktionselementes innerhalb des Gehäuseteils derart, dass die Nabenöffnung mit den Lageraufnahmen fluchtet;
Erzeugen einer Temperaturdifferenz zwischen dem Gehäuseteil und der Welle, mit der die Welle in das Gehäuse eingesetzt und dabei mit der Verdickung durch zumindest eine der Lageraufnahmen geführt wird;
Bewirken eines Temperaturausgleichs zwischen Welle und Gehäuseteil;
lagerichtiges Anordnen des zumindest einen Funktionselementes gegenüber der Welle; und Erzeugen eines Pressverbandes zwischen Nabenöffnung und der zugeordneten Verdickung.

Insbesondere kann es sich bei dem Kraftfahrzeugmodul um eine Nockenwellenanordnung handeln, bei der die Nockenwelle direkt an einem Zylinderkopf oder in einer Zylinderkopfhaube montiert wird.

Ein gattungsgemäßes Verfahren ist aus der DE 10 2010 045 047 A1 bekannt, wobei nach dem Anordnen des zumindest einen Funktionselementes innerhalb des Gehäuseteils, dem Erzeugen einer Temperaturdifferenz und dem Einsetzen der Welle zunächst ein Temperaturausgleich zwischen Welle und Gehäuseteil bewirkt wird, bevor das zumindest eine Funktionselement gegenüber der Welle lagerichtig angeordnet ist und wobei nachfolgend das zumindest eine Funktionselement gegenüber der Welle durch ein Verpressen der Nabenöffnung mit der zugeordneten Verdickung lagerichtig angeordnet wird.

Um den Montageaufwand beim Zusammenbau eines Kraftfahrzeugmotors zu verringern und die Lagerhaltungs- und Logistikkosten bei der Motormontage zu reduzieren, können Automobilherstellern bereits vorgefertigte Module bereitgestellt werden. Ein solches Kraftfahrzeugmotorenmodul kann beispielsweise aus zumindest einer Nockenwelle und einem Gehäuse in Form eines Zylinderkopfes oder einer Zylinderkopfhaube bestehen, wobei die Nockenwelle in dem entsprechenden Gehäuseteil bereits drehbar gelagert ist.

So beschreibt die DE 10 2010 045 047 A1 ein Verfahren, bei dem das Fügen von Funktionselementen in Form von Nocken mit einer Welle innerhalb der Zylinderkopfhaube erfolgt, so dass die Lageraufnahmen einstückig ausgebildet werden können. Es wird also eine Einheit gebildet, bei der die Nockenwelle mit den Nocken nicht mehr zerstörungsfrei von der Zylinderkopfhaube oder alternativ dem Zylinderkopf getrennt werden kann.

Die Nocken werden mit Nabenöffnungen fluchtend zu den Lageraufnahmen der Zylinderkopfhaube angeordnet, wobei lediglich die Reihenfolge der Bauteile untereinander und in Bezug auf die Lageraufnahmen berücksichtigt wird und wobei die Bauteile noch nicht in ihrer endgültigen Winkelposition gehalten sind. Es wird dann ein Temperaturunterschied erzeugt, der das Einschieben der Welle in die Durchgangsöffnungen sowie in die Lageraufnahmen ermöglicht, wobei dann die Funktionselemente in Form von Nocken jeweils benachbart zu einer Verdickung der Welle in Form einer Durchmessererweiterung angeordnet sind.

Alternativ kann eine geringfügige Überdeckung der Funktionselemente mit einem Rand der Verdickung vorgesehen sein, um die Funktionselemente zunächst in ungeordneter bzw. noch nicht funktionsgerechter Winkelanordnung vorzufixieren.

Nach einem Temperaturausgleich passen die Nabenöffnungen nicht mehr über die beispielsweise durch Rollierungen gebildeten Durchmessererweiterungen, so dass dann ein Aufpressen dieser Funktionselemente auf die zugeordnete Durchmessererweiterung erfolgt, wobei erst dabei die Bauteile zueinander in einer vorgegebenen Winkelposition ausgerichtet und axial in ihrer endgültigen Position auf der Welle angeordnet werden. Falls die Funktionselemente wie zuvor beschrieben vorfixiert sind, werden diese zuvor von der Durchmessererweiterung gelöst und erst dann ausgerichtet und aufgepresst.

Das bekannte, gattungsgemäße Verfahren zeichnet sich dadurch aus, dass die einzelnen Nocken bzw. Funktionselemente während des Einschiebens der Welle noch nicht genau ausgerichtet sein müssen. Es ist deshalb nicht notwendig, die Teile mit einem großen Aufwand in einem Halterahmen oder dergleichen zu fixieren. Vielmehr können die einzelnen Funktionselemente nacheinander auf die Welle aufgepresst werden, wobei dann lediglich von Aufpressvorgang zu Aufpressvorgang die Welle in einer geeigneten Weise zu verdrehen ist, um eine lagerichtige Winkelorientierung sämtlicher Funktionselemente zu erreichen.

Ein Verfahren, bei dem die zu montierenden Funktionselemente in einem Rahmen gehalten werden müssen, ist aus der EP 1 155 770 B1 bekannt.

Das eingangs beschriebene Verfahren hat sich zur Herstellung von Nockenwellenmodulen bewährt. Allerdings besteht das Bedürfnis, die Belastbarkeit und Verschleißfestigkeit des Kraftfahrzeugmoduls zu verbessern.

Lösung der Aufgabe und Gegenstand der Erfindung ist ein Verfahren gemäß Patentanspruch 1. Ausgehend von einem Verfahren mit den eingangs beschriebenen Merkmalen ist erfindungsgemäß vorgesehen, dass vor dem Einsetzen der Welle in das Gehäuseteil zumindest eine der Lageraufnahmen derart gebildet wird, dass ein Wälzlager in einer Aufnahmeöffnung des Gehäuseteils eingesetzt, insbesondere eingepresst wird.

Erfindungsgemäß ist also ein zusätzlicher, hinsichtlich der Montage der Welle vorgelagerter Verfahrensschritt vorgesehen, bei dem an zumindest einer Lageraufnahme ein Wälzlager eingesetzt wird. Dadurch wird also die Durchführung der entsprechenden Lageraufnahme von dem Innendurchmesser des Wälzlagers, also üblicherweise dem Innenring des Wälzlagers, gebildet.

Dadurch ergeben sich gegenüber dem bekannten Verfahren mehrere Vorteile. Zunächst kann dauerhaft eine geringe Reibung zwischen dem Gehäuseteil und der daran drehbar gelagerten Welle erreicht werden.

Zusätzlich ergibt sich auch eine Vereinfachung, weil zumindest an der mit dem Wälzlager versehenen Lageraufnahme keine aufwendige Oberflächenbearbeitung der Welle notwendig ist, um eine präzise gleitende Lagerung zu ermöglichen.

Des Weiteren muss bei dem bekannten Verfahren für die Erzeugung eines definierten Lagerspaltes für die Gleitlagerung eine präzise Abstimmung der Lageraufnahme auf den entsprechend zugeordneten Außendurchmesser in der Welle erfolgen. Wenn stattdessen ein Wälzlager eingesetzt wird, kann gemäß einer bevorzugten Ausgestaltung der Erfindung zwischen dem Innenring des Wälzlagers und der zugeordneten Mantelfläche der Welle ein Presssitz erzeugt werden, so dass also die Welle dort ein Übermaß gegenüber dem Innenring aufweist. Sofern an dem Lager nicht auch axiale Kräfte aufgenommen werden müssen, darf die Kraft des Presssitzes auch in einem gewissen Maße variieren, so dass dann insgesamt geringe Anforderungen an die Genauigkeit gestellt werden müssen.

Ein weiterer Vorteil ist darin zu sehen, dass von einem Wälzlager auch größere Kippmomente aufgenommen werden können. Solche Kippmomente können insbesondere im Bereich eines Antriebes der Welle auftreten. Beispielsweise werden Nockenwellen üblicherweise durch einen Zahnriemen oder ein Zahnrad angetrieben, wozu an einem Ende der Nockenwelle ein entsprechendes Antriebszahnrad vorgesehen ist. Durch die Spannung des Zahnriemens bzw. der Steuerkette wird ein Zug auf die Nockenwelle ausgeübt, welcher als Kippmoment von den Lageraufnahmen aufgenommen werden muss.

Vor diesem Hintergrund kann vorgesehen sein, dass die Welle an einer Lageraufnahme durch das Wälzlager und einer anderen Lageraufnahme durch eine gleitende Lagerung drehbar angeordnet wird, wobei die Lagerstelle mit dem Wälzlager an einer mit einem Wellenantrieb versehenen Seite der Welle gebildet wird.

Eine solche Ausgestaltung kommt insbesondere dann in Betracht, wenn an einem Wellenende hohe Belastungen erwartet werden, ansonsten jedoch eine Gleitlagerung ausreichend ist.

Gemäß einer alternativen, bevorzugten Ausgestaltung der Erfindung werden sämtliche Lageraufnahmen des Gehäuseteils mit jeweils einem Wälzlager versehen, wodurch dauerhaft eine besonders leichtgängige und zuverlässige Lagerung erreicht wird.

Grundsätzlich kommen unterschiedliche Typen von Wälzlagern in Betracht. Besonders bevorzugt wird ein Nadellager eingesetzt, welches sich bei einem kompakten Aufbau durch eine hohe Tragkraft hinsichtlich Belastungen in radialer Richtung auszeichnet.

Das erfindungsgemäße Verfahren ist allgemein für den Zusammenbau eines Kraftfahrzeugmoduls, insbesondere eines Kraftfahrzeugmotormoduls, geeignet, welches eine Welle mit Funktionselementen aufweist, die in einem Gehäuseteil angeordnet ist. Bevorzugt handelt es sich um ein Nockenwellenmodul, wobei aber beispielsweise auch ein Exzenterwellenmodul mit dem erfindungsgemäßen Verfahren montiert werden kann.

Gemäß einer bevorzugten Ausgestaltung der Erfindung ist ausgehend von dem aus DE 10 2010 045 047 A1 bekannten Verfahren vorgesehen, dass bei dem Verfahren zum Zusammenbau des Kraftfahrzeugmoduls die nachfolgend angegebenen Schritte in der angegebenen Reihenfolge durchgeführt werden:
Anordnen des zumindest einen Funktionselementes innerhalb des Gehäuseteils derart, dass die Nabenöffnung mit den Lageraufnahmen fluchtet;
Erzeugen einer Temperaturdifferenz zwischen dem Gehäuseteil und der Welle, mit der die Welle in das Gehäuse eingesetzt und dabei mit der Verdickung durch zumindest eine der Lageraufnahmen geführt wird;
Bewirken eines Temperaturausgleiches zwischen Welle und Gehäuseteil, bevor das zumindest eine Funktionselement gegenüber der Welle lagerichtig angeordnet ist; und
lagerichtiges Anordnen des zumindest einen Funktionselementes gegenüber der Welle durch ein Verpressen der Nabenöffnung mit der zugeordneten Verdickung.

Im Rahmen der Erfindung ist aber auch eine andere Verfahrensführung möglich. So kann beispielsweise die lagerichtige Anordnung des zumindest einen Funktionselementes grundsätzlich auch vor dem Bewirken des Temperaturausgleiches zwischen Welle und Gehäuseteil erfolgen, so dass dann alleine durch den Temperaturausgleich ein Pressverband zwischen der Nabenöffnung der zugeordneten Verdickung der Welle erzeugt wird.

Erfindungsgemäß ist zumindest ein Funktionselement vorhanden, wobei aber üblicherweise eine Vielzahl von Funktionselementen wie zuvor beschrieben auf der Welle montiert wird. Bei einem Nockenwellenmodul werden entsprechend sämtliche Nocken als Funktionselemente zunächst in der beschriebenen Weise auf die Welle aufgefädelt und sodann lagerichtig durch ein Verpressen angeordnet. Bei einem Nockenwellenmodul werden also eine Vielzahl von Nocken als Funktionselemente mit jeweils einer Verdickung der Welle verbunden, wobei für das Einsetzen der Welle in das Gehäuseteil auch eine Temperaturdifferenz zwischen der Welle und zumindest einem Teil der Nocken, üblicherweise sämtlichen Nocken erzeugt und die Welle mit ihren Verdickungen durch die zugeordneten Nabenöffnungen dieser Funktionselemente geführt wird.

Die Temperaturdifferenz kann auf unterschiedliche Weise erzeugt werden. Vorzugsweise ist vorgesehen, dass die Welle gekühlt und/oder das Gehäuseteil sowie die Funktionselemente erwärmt werden. Unter Berücksichtigung des Ausdehnungseffizienten von Metall schrumpft die Welle durch ein Abkühlen, während sich das Gehäuseteil und die Funktionselemente bei einem Erwärmen aufweiten. Das Aufweiten führt dabei dazu, dass der Durchmesser der Nabenöffnungen erweitert wird.

Vorzugsweise wird die Welle zwischen dem Erzeugen der Temperaturdifferenz und dem Bewirken des Temperaturausgleiches in dem Gehäuseteil lagerichtig derart positioniert, dass sich die Lageraufnahmen mit Lagerabschnitten der Welle überdecken. Dabei kann insbesondere vorgesehen sein, dass an zumindest einer der Lageraufnahmen der Lagerabschnitt bei dem Bewirken des Temperaturausgleichs in einem Presssitz, also einem Querpresssitz, mit einem Innenring des Wälzlagers verbunden wird. Die Welle ist dann bereits axialfest in dem Gehäuseteil aufgenommen und gehalten, wobei danach die einzelnen Funktionselemente vorzugsweise unter Erzeugung eines Längspresssitzes verpresst werden.

Durch die Befestigung der Welle an dem Wälzlager in einem ersten Schritt und die nachgelagerte Befestigung der Funktionselemente an der Welle kann eine besonders einfache Verfahrensführung erreicht werden, wobei auf besonders vorteilhafte Weise unterschiedliche Arten von Pressverbänden, nämlich ein Querpresssitz zwischen Welle und in den Ring des Wälzlagers einerseits und ein Längspresssitz zwischen Welle und Funktionselement andererseits, kombiniert werden können. Der in dem ersten Verfahrensschritt an der Lageraufnahme zwischen Innenring und Welle erzeugte Querpresssitz ist ausreichend, um die Welle in einem gewissen Maße axial zu fixieren und genügt den an der Lageraufnahme auftretenden Belastungen. Mit dem Längspresssitz kann insbesondere in Kombination mit einer Konturierung der Nabenöffnung und/oder der Verdickung eine besonders zuverlässige, auch bei erhöhten Drehmomenten drehfeste Verbindung sichergestellt werden.

Um im Rahmen des beschriebenen Verfahrens den Temperaturausgleich zu beschleunigen, können die Welle und das Gehäuseteil einem Fluid, beispielsweise Druckluft oder einer Flüssigkeit wie Wasser ausgesetzt werden, um das kältere Teil aufzuwärmen bzw. das wärmere Teil abzukühlen.

Die Verdickungen können durch einen einfachen Umformprozess der Welle, beispielsweise die Erzeugung einer Rollierung, gebildet werden.

Erfindungsgemäß wird das Wälzlager vor dem Einsetzen der Welle in der zugeordneten Aufnahmeöffnung angeordnet. Davon ausgehend verbleiben jedoch noch Variationsmöglichkeiten hinsichtlich der genauen Abfolge der einzelnen Verfahrensschritte. So kann das Wälzlager in einem vollständig vorgelagerten ersten Verfahrensschritt in die zugeordnete Aufnahmeöffnung eingesetzt werden.

Des Weiteren kann das Einsetzen des Wälzlagers in die Aufnahmeöffnung auch dann erfolgen, wenn die Funktionselemente innerhalb des Gehäuseteils mit ihren Nabenöffnungen fluchtend angeordnet werden. Im Gegensatz zu den Funktionselementen wird dann das Wälzlager jedoch bereits in axialer Richtung in seiner endgültigen Position in Bezug auf das Gehäuseteil angeordnet.

Schließlich ist es grundsätzlich auch möglich, das Wälzlager erst unmittelbar vor dem Einführen der Welle in eine zugeordnete Aufnahmeöffnung einzusetzen. Wenn beispielsweise das Gehäuseteil eine hohe, die Welle eine niedrige und das Wälzlager eine mittlere Temperatur aufweisen und die Abmessungen in geeigneter Weise aufeinander abgestimmt sind, kann das Wälzlager an seinem Außenumfang mit Spiel in die zugeordnete Aufnahmeöffnung eingesetzt werden, wobei gleichzeitig auch die Welle mit Spiel durch den Innenring des Wälzlagers hindurchgeführt werden kann. Ein Pressverband zwischen dem Außenring und der Aufnahmeöffnung einerseits sowie dem Innenring und der Welle andererseits erfolgt dann erst, wenn ein Temperaturangleich der Teile erfolgt.

Die Erfindung wird im Folgenden anhand einer lediglich ein Ausführungsbeispiel darstellenden Figur erläutert. Es zeigen:
- Fig. 1: einen ersten Verfahrensschritt zum Zusammenbau eines Kraftfahrzeugmoduls, wobei zur Bildung einer Lageraufnahme ein Wälzlager in eine Aufnahmeöffnung eingesetzt wird,
- Fig. 2: das Einsetzen einer Welle in das in Fig. 1 dargestellte Gehäuseteil,
- Fig. 3: ein Verfahrensschritt zur Positionierung von Funktionselementen auf der Welle,
- Fig. 4: ein Kraftfahrzeugmodul im Längsschnitt,
- Fig. 5: das Kraftfahrzeugmodul gemäß Fig. 4 in einer Ansicht von unten.

Die vorliegende Erfindung betrifft ein Verfahren zum Zusammenbau eines Kraftfahrzeugmoduls, insbesondere eines Kraftfahrzeugmotormoduls, welches eine zumindest mit einem Funktionselement versehene Welle 1 und ein Gehäuseteil 2 aufweist. Insbesondere handelt es sich bei dem Modul um eine Nockenwellenanordnung, wobei die Welle 1 mit Funktionselementen in Form von Nocken 3 in das Gehäuseteil 2 eingesetzt ist. Bei dem Gehäuseteil 2 handelt es sich dann entweder um einen Zylinderkopf oder eine Zylinderkopfhaube, in der die Nockenwelle eingebaut ist.

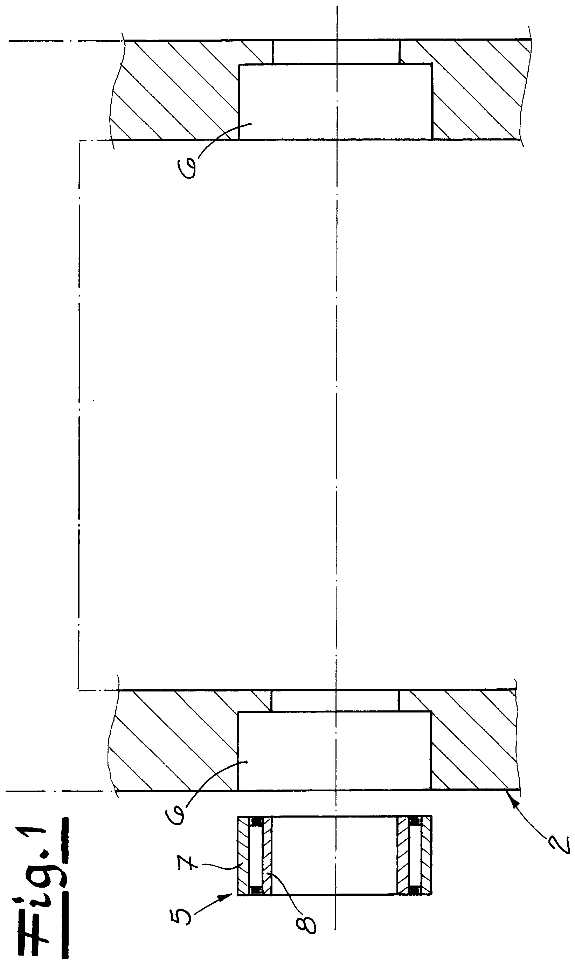

Die Fig. 1 zeigt in diesem Zusammenhang einen ersten Verfahrensschritt, um an dem Gehäuseteil 2 Lageraufnahmen 4 zu bilden, welche jeweils ein Wälzlager 5 aufweisen. Das Wälzlager 5, in dem dargestellten Ausführungsbeispiel ein Nadellager, wird in eine zugeordnete Aufnahmeöffnung 6 des Gehäuseteils 2 eingesetzt. Insbesondere kann das Wälzlager 5 in die Aufnahmeöffnung 6 eingepresst werden. Das Einpressen kann in axialer Richtung dadurch erfolgen, dass ein Außenring 7 des Wälzlagers 5 ein leichtes Übermaß gegenüber der Aufnahmeöffnung 6 aufweist. Alternativ kann auch eine Schrumpfpressung dadurch erfolgen, dass das Gehäuseteil 2 zumindest im Bereich der Aufnahmeöffnung 6 erwärmt und damit aufgeweitet und/oder das Wälzlager 5 gekühlt und damit geschrumpft wird.

Wenn das Wälzlager 5 in die Aufnahmeöffnung 6 eingesetzt ist, bildet ein Innenring 8 die lichte Öffnung der Lageraufnahme 4.

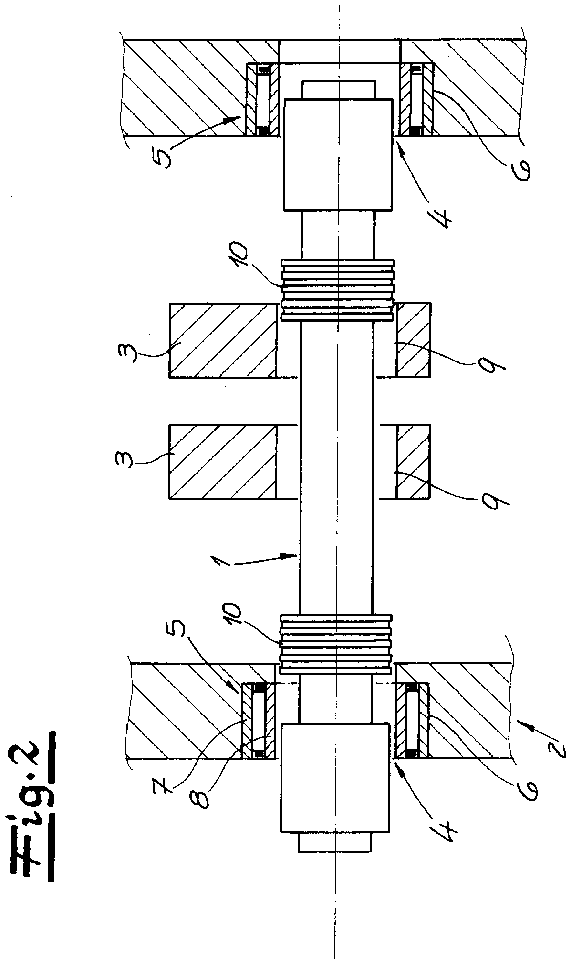

Nachfolgend werden in an sich bekannter Weise Nocken 3 derart an dem Gehäuseteil 2 angeordnet, dass Nabenöffnungen 9 der Nocken 3 mit den Innenringen 8 als Durchführungen der Lageraufnahmen 4 fluchten, worauf dann die Welle eingeschoben wird (Fig. 2).

Die Welle 1 weist an den Axialpositionen, an denen die Nocken 3 anzuordnen sind, jeweils eine Rollierung 10 auf. Die Welle 1 kann durch die Lageraufnahmen 4 und die Nabenöffnungen 9 hindurchgeschoben werden, weil zwischen der Welle 1 einerseits und dem Gehäuseteil 2 sowie den Nocken 3 andererseits eine Temperaturdifferenz erzeugt ist. Insbesondere kann die Welle 1 durch eine Kühlung geschrumpft sein, wobei zusätzlich oder alternativ die Lageraufnahmen 4 sowie die Nocken 3 und damit auch die Nabenöffnungen 9 durch eine Erwärmung aufgeweitet sind.

Gemäß der Fig. 2 befinden sich die einzelnen Nocken 3 hinsichtlich ihrer axialen Ausrichtung sowie ihrer Winkelausrichtung noch nicht in ihrer Endposition. Die Nocken 3 sind neben den Rollierungen 10 angeordnet. Alternativ kann vorgesehen sein, dass die Nocken 3 am Rand der Rollierung 10 angeordnet sind und zunächst wieder gelöst werden müssen.

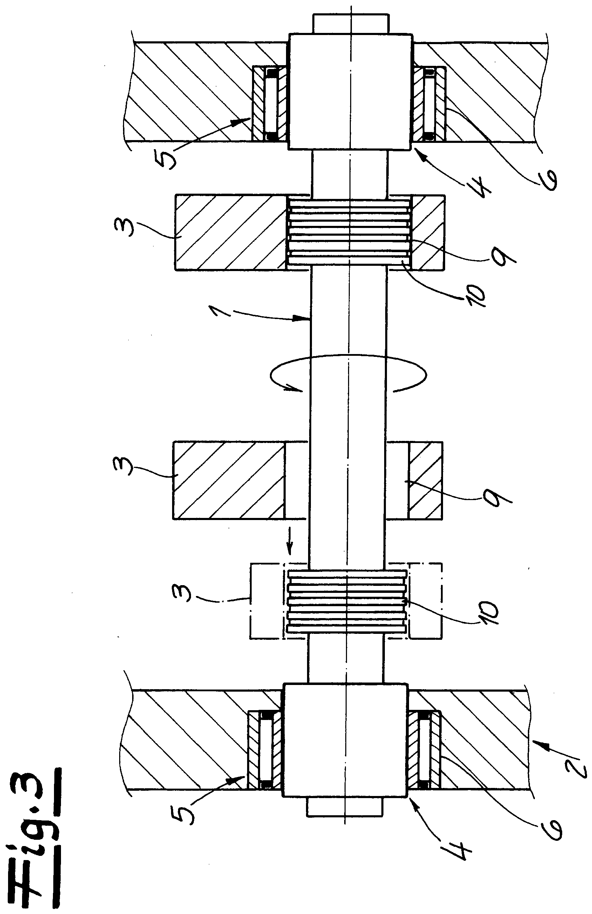

Um die Nocken 3 in ihre endgültige Position zu bringen, werden diese auf die Rollierung 10 aufgepresst. Gleichzeitig werden die Nocken 3 auch in der richtigen Winkelbeziehung zueinander angeordnet. Dies ist gemäß der Fig. 3 auf besonders einfache Weise dadurch möglich, dass die Nocken 3 einzeln auf die jeweilige Rollierung 10 aufgepresst werden, wobei die Welle 1 zwischen den aufeinander folgenden Aufpressvorgängen für die einzelnen Nocken 3 im geeigneten Maße verdreht wird.

Gemäß dem Ausführungsbeispiel der Fig. 3 sind an beiden dargestellten Lageraufnahmen 4 Wälzlager 5 vorgesehen. In entsprechender Weise können entlang der gesamten Welle 1 mehrere Lageraufnahmen 4 vorhanden sein, welche jeweils ein Wälzlager 5 aufweisen.

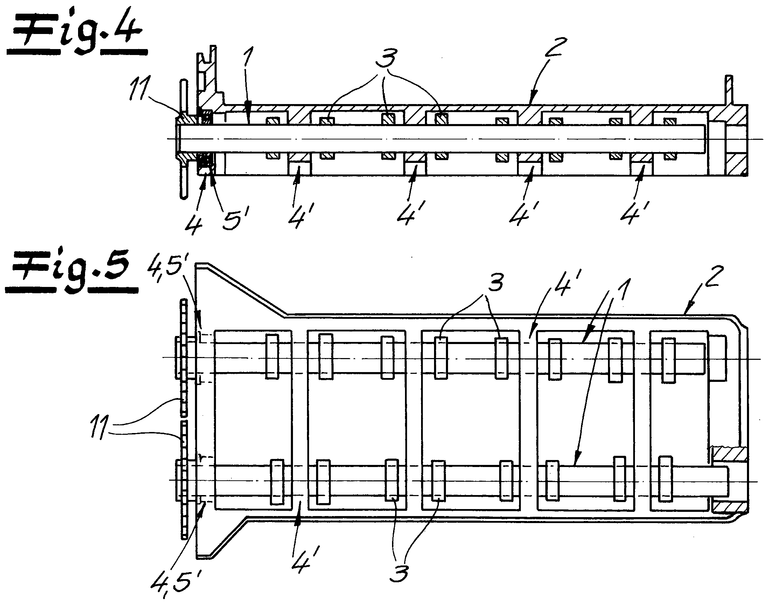

Die Fig. 4 zeigt davon ausgehend eine alternative Ausgestaltung, bei der lediglich an einer Lageraufnahme 4 ein Wälzlager 5' vorhanden ist, während an den übrigen Lageraufnahmen 4' eine gleitende Lagerung erfolgt. Das Wälzlager 5', in dem dargestellten Ausführungsbeispiel ein Kugellager, ist dazu vorgesehen, um an dem entsprechenden Ende der Welle 1 erhöhte Kräfte aufnehmen zu können, welche von einem auf der Welle 1 montierten Antriebszahnrad 11 ausgeübt werden. Gemäß der Fig. 4 ist die Welle 1 mit den darauf angeordneten Nocken 3 in einem Gehäuseteil 2 in Form einer Zylinderkopfhaube angeordnet.

Die Fig. 5 zeigt die Zylinderkopfhaube in einer Ansicht von unten, wobei dort zwei Wellen 1 mit Nocken 3 für die Steuerung der Einlassventile sowie der Auslassventile eines Verbrennungsmotors angeordnet sind. Für beide Wellen 1 ist ausgehend von dem jeweiligen Antriebszahnrad 11 in der ersten Lageraufnahme 4 die Abstützung durch ein Wälzlager 5' vorgesehen.

## Patentansprüche

1. Verfahren zum Zusammenbau eines Kraftfahrzeugmoduls, welches eine mit zumindest einem Funktionselement versehene Welle (1) und ein Gehäuseteil (2) aufweist, wobei die Welle (1) in Lageraufnahmen (4) des Gehäuseteils (2) drehbar angeordnet ist und wobei das zumindest eine Funktionselement mit einer Nabenöffnung (9) auf einer Verdickung der Welle (1) befestigt ist, umfassend die Verfahrensschritte:
a) Anordnung des zumindest einen Funktionselementes innerhalb des Gehäuseteils (2) derart, dass die Nabenöffnung (9) mit den Lageraufnahmen (4) fluchtet;
b) Erzeugen einer Temperaturdifferenz zwischen dem Gehäuseteil (2) und der Welle (1), mit der die Welle (1) in das Gehäuseteil (2) eingesetzt und dabei mit der Verdickung durch zumindest eine der Lageraufnahmen (4) geführt wird;
c) Bewirken eines Temperaturausgleichs zwischen Welle (1) und Gehäuseteil (2),
d) lagerichtiges Anordnen des zumindest einen Funktionselementes gegenüber der Welle (1);
e) Erzeugen eines Pressverbandes zwischen Nabenöffnung (9) und der zugeordneten Verdickung;
**dadurch gekennzeichnet, dass** vor dem Einsetzen der Welle (1) in das Gehäuseteil (2) zumindest eine der Lageraufnahme (4) derart gebildet wird, dass ein Wälzlager (5) in eine Aufnahmeöffnung (6) des Gehäuseteils (2) eingesetzt, insbesondere eingepresst, wird.

2. Verfahren nach Anspruch 1, **dadurch gekennzeichnet, dass** nach den Verfahrensschritten a) und b) zunächst ein Temperaturausgleich zwischen Welle (1) und Gehäuseteil (2) bewirkt wird, bevor das zumindest eine Funktionselement gegenüber der Welle lagerichtig angeordnet ist, wobei nachfolgend das zumindest eine Funktionselement gegenüber der Welle (1) durch ein Verpressen der Nabenöffnung (9) mit der zugeordneten Verdickung lagerichtig angeordnet wird.

3. Verfahren nach Anspruch 1 oder 2, **dadurch gekennzeichnet, dass** ein als Nadellager ausgeführtes Wälzlager (5) eingepresst wird.

4. Verfahren nach einem der Ansprüche 1 bis 3, **dadurch gekennzeichnet, dass** sämtliche Lageraufnahmen (4) des Gehäuseteils (2) mit einem Wälzlager (5) versehen werden.

5. Verfahren nach einem der Ansprüche 1 bis 3, **dadurch gekennzeichnet, dass** die Welle (1) an einer Lageraufnahme (4) durch das Wälzlager (5) und an einer anderen Lageraufnahme (4) durch eine gleitende Lagerung drehbar angeordnet wird, wobei die Lageraufnahme (4) mit dem Wälzlager (5) an einer mit einem Wellenantrieb versehenen Seite der Welle (1) gebildet wird.

6. Verfahren nach einem der Ansprüche 1 bis 5, **dadurch gekennzeichnet, dass** eine Vielzahl von Nocken (3) als Funktionselementen mit jeweils einer Verdickung der Welle (1) verbunden werden, wobei für das Einsetzen der Welle (1) in das Gehäuseteil (2) auch eine Temperaturdifferenz zwischen der Welle (1) und zumindest einem Teil der Nocken (3) erzeugt und die Welle (1) mit ihren Verdickungen durch die zugeordneten Nabenöffnungen (9) dieser Funktionselemente geführt wird.

7. Verfahren nach einem der Ansprüche 1 bis 6, **dadurch gekennzeichnet, dass** zwischen dem Erzeugen der Temperaturdifferenz und dem Bewirken des Temperaturausgleichs die Welle (1) derart in dem Gehäuseteil (2) lagerichtig positioniert wird, dass sich die Lageraufnahmen (4) mit Lagerabschnitten der Welle (1) überdecken.

8. Verfahren nach Anspruch 7, **dadurch gekennzeichnet, dass** an zumindest einer Lageraufnahme (4) der Lagerabschnitt bei dem Bewirken des Temperaturausgleichs in einem Presssitz mit einem Innenring (8) des Wälzlagers (5) verbunden wird.

9. Verfahren nach einem der Ansprüche 1 bis 8, **dadurch gekennzeichnet, dass** zur Erzeugung der Temperaturdifferenz die Welle (1) gekühlt und/oder das Gehäuseteil (2) sowie das zumindest eine Funktionselement erwärmt werden.

10. Verfahren nach einem der Ansprüche 1 bis 9, **dadurch gekennzeichnet, dass** zumindest eine Verdickung der Welle (1) durch ein Rollieren gebildet wird.

## Claims

1. Method for assembling a motor vehicle module which has a shaft (1) provided with at least one functional element, and a housing part (2), wherein the shaft (1) is arranged rotatably in bearing receptacles (4) of the housing part (2), and wherein the at least one functional element is fastened by a hub opening (9) on a thickened portion of the shaft (1), comprising the following method steps:
a) arranging the at least one functional element within the housing part (2) in such a manner that the hub opening (9) is aligned with the bearing receptacles (4);
b) producing a temperature difference between the housing part (2) and the shaft (1), at which the shaft (1) is inserted into the housing part (2) and is guided here by the thickened portion through at least one of the bearing receptacles (4);
c) bringing about a temperature equalization between shaft (1) and housing part (2),
d) positionally correctly arranging the at least one functional element in relation to the shaft (1);
e) producing an interference fit between hub opening (9) and the associated thickened portion;
**characterized in that**, before the shaft (1) is inserted into the housing part (2), at least one of the bearing receptacles (4) is formed in such a manner that a rolling bearing (5) is inserted, in particular pressed, into a receiving opening (6) of the housing part (2).

2. Method according to Claim 1, **characterized in that**, after the method steps a) and b), first of all temperature equalization between shaft (1) and housing part (2) is brought about before the at least one functional element is arranged in a positionally correct manner in relation to the shaft, wherein the at least one fuctional element is subsequently arranged in a positionally correct manner in relation to the shaft (1) by press compaction of the hub opening (9) with the associated thickened portion.

3. Method according to Claim 1 or 2, **characterized in that** a rolling bearing (5) in the form of a needle bearing is pressed in.

4. Method according to one of Claims 1 to 3, **characterized in that** all of the bearing receptacles (4) of the housing part (2) are provided with a rolling bearing (5).

5. Method according to one of Claims 1 to 3, **characterized in that** the shaft (1) is arranged rotatably on one bearing receptacle (4) by means of the rolling bearing (5) and on another bearing receptacle (4) by means of a sliding mounting, wherein the bearing receptacle (4) with the rolling bearing (5) is formed on a side of the shaft (1) that is provided with a shaft drive.

6. Method according to one of Claims 1 to 5, **characterized in that** a multiplicity of cams (3) as functional elements are connected to a respective thickened portion of the shaft (1), wherein, for the insertion of the shaft (1) into the housing part (2), a temperature difference is also produced between the shaft (1) and at least some of the cams (3), and the shaft (1) is guided by its thickened portions through the associated hub openings (9) of said functional elements.

7. Method according to one of Claims 1 to 6, **characterized in that**, between the production of the temperature difference and the bringing about of the temperature equalization, the shaft (1) is positioned in a positionally correct manner in the housing part (2) in such a manner that the bearing receptacles (4) overlap with bearing portions of the shaft (1).

8. Method according to Claim 7, **characterized in that**, on at least one bearing receptacle (4), the bearing portion is connected to an inner ring (8) of the rolling bearing (5) in a press fit when the temperature equalization is brought about.

9. Method according to one of Claims 1 to 8, **characterized in that**, in order to produce the temperature difference, the shaft (1) is cooled and/or the housing part (2) and the at least one functional element are heated.

10. Method according to one of Claims 1 to 9, **characterized in that** at least one thickened portion of the shaft (1) is formed by roller burnishing.

## Revendications

1. Procédé d'assemblage d'un module de véhicule automobile comportant un arbre (1) pourvu d'au moins un élément fonctionnel et une partie de carter (2), l'arbre (1) étant disposé de façon à pouvoir tourner dans des logements de roulement (4) de la partie de carter (2) et l'au moins un élément fonctionnel étant fixé sur une protubérance de l'arbre (1) avec une ouverture de moyeu (9), comprenant les étapes de procédé suivantes :
a) agencement de l'au moins un élément fonctionnel à l'intérieur de la partie de carter (2) de telle sorte que l'ouverture de moyeu (9) s'aligne avec les logements de roulement (4) ;
b) production d'une différence de température entre la partie de carter (2) et l'arbre (1) avec laquelle l'arbre (1) est inséré dans la partie de carter (2) et est notamment guidé avec la protubérance à travers au moins un des logements de roulement (4) ;
c) action d'un équilibrage de température entre l'arbre (1) et la partie de carter (2) ;
d) agencement bien positionné de l'au moins un élément fonctionnel par rapport à l'arbre (1) ;
e) réalisation d'un joint à ajustement serré entre l'ouverture de moyeu (9) et la protubérance associée ;
**caractérisé en ce qu'**avant l'insertion de l'arbre (1) dans la partie de carter (2), au moins un des logements de roulement (4) est formé de telle sorte qu'un roulement à rouleaux (5) soit inséré, notamment comprimé, dans une ouverture de logement (6) de la partie de carter (2).

2. Procédé selon la revendication 1, **caractérisé en ce qu'**après les étapes de procédé a) et b), un équilibrage de température est d'abord produit entre l'arbre (1) et la partie de carter (2) avant que l'au moins un élément fonctionnel soit disposé en bonne position par rapport à l'arbre, l'au moins un élément fonctionnel étant ensuite disposé en bonne position par rapport à l'arbre (1) par une compression de l'ouverture de moyeu (9) avec la protubérance associée.

3. Procédé selon la revendication 1 ou 2, **caractérisé en ce qu'**un roulement à rouleaux (5) réalisé à la façon d'un roulement à aiguilles est comprimé.

4. Procédé selon l'une quelconque des revendications 1 à 3, caractérisé en ce tous les logements de roulement (4) de la partie de carter (2) sont pourvus de roulement à rouleaux (5).

5. Procédé selon l'une quelconque des revendications 1 à 3, **caractérisé en ce que** l'arbre (1) est disposé de façon à pouvoir tourner au niveau d'un logement de roulement (4) au travers d'un roulement à rouleaux (5) et au niveau d'un autre logement de roulement (4) au travers d'un palier glissant, le logement de roulement (4) étant formé avec le roulement à rouleaux (5) au niveau d'un côté de l'arbre (1) pourvu d'un entraînement d'arbre.

6. Procédé selon l'une quelconque des revendications 1 à 5, **caractérisé en ce qu'**une pluralité de cames (3) prenant la forme d'éléments fonctionnels sont reliées à respectivement une protubérance de l'arbre (1), une différence de température entre l'arbre (1) et au moins une partie de la came (3) étant produite pour insérer l'arbre (1) dans la partie de carter (2) et l'arbre (1) étant guidé avec ses protubérances au travers des ouvertures de moyeu (9) associées de ces éléments fonctionnels.

7. Procédé selon l'une quelconque des revendications 1 à 6, **caractérisé en ce qu'**entre la réalisation de la différence de température et la réalisation de l'équilibrage de température, l'arbre (1) est bien positionné de telle sorte dans la partie de carter (2) que les logements de roulement (4) se chevauchent avec les sections de roulement de l'arbre (1).

8. Procédé selon la revendication 7, **caractérisé en ce que** la section de roulement est reliée au niveau d'au moins un logement de roulement (4), lors de la réalisation de l'équilibrage de température, dans un ajustement serré avec une bague intérieure (8) du roulement à rouleaux (5).

9. Procédé selon l'une quelconque des revendications 1 à 8, **caractérisé en ce que** pour réaliser la différence de température, l'arbre (1) est refroidi et/ou que la partie de carter (2) ainsi que l'au moins un élément fonctionnel sont réchauffés.

10. Procédé selon l'une quelconque des revendications 1 à 9, **caractérisé en ce qu'**au moins une protubérance de l'arbre (1) est formée par un roulage.
